# EUROPEAN PATENT APPLICATION

(11) **EP 4 663 547 A1**
(43) Date of publication of application: **17.12.2025**
(21) Application number: 25183115.2
(22) Date of filing: 16.06.2025
(51) Int. Cl.: B64D 27/33, F01D 15/10, F02C 7/32

(54) **AIRCRAFT PROPULSION SYSTEM AND METHOD FOR OPERATING SAME**

(30) Priority: 14.06.2024 US 202418743347
(71) Applicant: PRATT & WHITNEY CANADA CORP., Longueuil, Québec J4G 1A1 (CA)
(72) Inventor: WEAVER, Paul, (01BE5) Longueuil, J4G 1A1 (CA); CHATELOIS, Bruno, (01BE5) Longueuil, J4G 1A1 (CA); BELLIS, Andrew D., (01BE5) Longueuil, J4G 1A1 (CA)
(74) Representative: Dehns

(57) **Abstract**

An aircraft propulsion system (20) includes a propulsor (26), a gas turbine engine (22), and an electrical assembly (24). The gas turbine engine (22) includes a rotational assembly (42) including a bladed turbine rotor (54) connected to the propulsor (26). The electrical assembly (24) includes an AC electric motor (58), a motor control unit (60), and an electrical distribution system (64). The AC electric motor (58) is coupled to the propulsor (26). The motor control unit (60) is electrically connected to the AC electric motor (58) and the electrical distribution system (64). The motor control unit (60) is selectively operable in a normal mode and a hotel mode. The motor control unit (60) is configured to, in the normal mode, convert electrical power from the electrical distribution system (64) to output AC electrical power and supply the output AC electrical power to the electric motor (58) and, in the hotel mode, apply a braking force to the rotational assembly (42) by converting the electrical power from the electrical distribution system (64) to output DC electrical power and supplying the output DC electrical power to the AC electric motor (58).

## Description

### TECHNICAL FIELD

This invention relates to systems and methods for controlling aircraft propulsion system propulsor rotation.

### BACKGROUND OF THE ART

Aircraft operating on the ground may require electrical power, compressed air, and other support functions from an associated aircraft propulsion system. Under some grounded operating conditions, it may be necessary to slow or stop rotation of a propulsor of the aircraft propulsion system. Various systems and methods for controlling propulsor rotation for aircraft propulsion systems are known. While these known systems and methods may be suitable for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present invention, an aircraft propulsion system includes a propulsor, a gas turbine engine, and an electrical assembly. The gas turbine engine includes a rotational assembly configured for rotation about a rotational axis of the gas turbine engine. The rotational assembly includes a bladed power turbine rotor and a shaft. The shaft operably connects the bladed power turbine rotor and the propulsor. The electrical assembly includes an alternating current (AC) electric motor, a motor control unit, and an electrical distribution system. The AC electric motor is coupled to the rotational assembly. The motor control unit is electrically connected to the AC electric motor and the electrical distribution system. The motor control unit is selectively operable in a normal mode and a hotel mode. The motor control unit includes a processor connected in signal communication with non-transitory memory containing instructions which, when executed by the processor, cause the processor to, in the normal mode, control the motor control unit to convert electrical power from the electrical distribution system to output AC electrical power and supply the output AC electrical power to the electric motor and, in the hotel mode, apply a braking force to the rotational assembly by controlling the motor control unit to convert the electrical power from the electrical distribution system to output DC electrical power and supplying the output DC electrical power to the AC electric motor.

In any of the aspects or embodiments described above and herein, the instructions, when executed by the processor, may cause the processor to control a magnitude of the braking force, in the hotel mode, by modulating one or both of a current or a voltage of the output DC electrical power.

In any of the aspects or embodiments described above and herein, the instructions, when executed by the processor, may cause the processor to increase the magnitude of the braking force, in the hotel mode, by modulating one or both of the current or the voltage in response to identifying a rotation speed of the propulsor greater than a rotation speed threshold.

In any of the aspects or embodiments described above and herein, the instructions, when executed by the processor, may cause the processor to increase the magnitude of the braking force, in the hotel mode, by modulating one or both of the current or the voltage in response to identifying a rotation speed of the rotational assembly greater than a rotation speed threshold.

In any of the aspects or embodiments described above and herein, the gas turbine engine may further include a second rotational assembly including a bladed compressor rotor, a bladed turbine rotor, and a second shaft. The second shaft may interconnect the bladed compressor rotor and the bladed turbine rotor. The electrical assembly may further include a generator coupled with the second rotational assembly. The generator may be electrically connected to the electrical distribution system.

In any of the aspects or embodiments described above and herein, the electrical assembly may further include a battery electrically connected to the electrical distribution system.

In any of the aspects or embodiments described above and herein, the AC electric motor may include a rotor. The rotor may be directly connected to the shaft.

In any of the aspects or embodiments described above and herein, the AC electric motor may include a rotor. The gas turbine engine may include a reduction gear box. The reduction gear box may couple the rotational assembly and the rotor to the propulsor.

According to another aspect of the present invention, a method for controlling a propulsor of an aircraft propulsion system includes rotating a first rotational assembly of a gas turbine engine. The first rotational assembly includes a bladed compressor rotor, a bladed turbine rotor, and a first shaft interconnecting the bladed compressor rotor and the bladed turbine rotor. The method further includes controlling rotation of a propulsor of the aircraft propulsion system with a second rotational assembly of the gas turbine engine. The second rotational assembly includes a bladed power turbine rotor and a second shaft. The second shaft operably connects the bladed turbine rotor and the propulsor. The method further includes applying a braking force to the second rotational assembly with an alternating current (AC) electric motor of an electrical assembly of the aircraft propulsion system. The electrical assembly includes a motor control unit electrically connected to the AC electric motor. Applying the braking force to the second rotational assembly with the AC electric motor includes supplying an output direct current (DC) electrical power to the AC electric motor with the motor control unit concurrent with rotating the first rotational assembly.

In any of the aspects or embodiments described above and herein, applying the braking force to the second rotational assembly may include controlling a magnitude of the braking force by modulating one or both of a current or a voltage of the output DC electrical power with the motor control unit.

In any of the aspects or embodiments described above and herein, the method may further include identifying a rotation of the propulsor. Controlling the magnitude of the braking force may include increasing the magnitude of the braking force in response to identifying the rotation of the propulsor.

In any of the aspects or embodiments described above and herein, the method may further include identifying a rotation of the second rotational assembly. Controlling the magnitude of the braking force may include increasing the magnitude of the braking force in response to identifying the rotation of the second rotational assembly.

In any of the aspects or embodiments described above and herein, the electrical assembly may further include an electrical distribution system and a generator. The electrical distribution system may be electrically connected to the generator and the motor control unit. The generator may be coupled to the first rotational assembly. Rotating the first rotational assembly may further include generating electrical power with the generator and supplying the electrical power to the electrical distribution system.

In any of the aspects or embodiments described above and herein, the electrical assembly may further include an electrical distribution system and a battery. Applying the braking force to the second rotational assembly may include supplying electrical power to the motor control unit with the battery through the electrical distribution system.

According to another aspect of the present invention, an aircraft propulsion system includes a propulsor, a gas turbine engine, and an electrical assembly. The gas turbine engine includes a first rotational assembly and a second rotational assembly. The first rotational assembly and the second rotational assembly are configured for rotation about a rotational axis of the gas turbine engine. The first rotational assembly includes a bladed compressor rotor, a bladed turbine rotor, and a first shaft interconnecting the bladed compressor rotor and the bladed turbine rotor. The second rotational assembly includes a bladed power turbine rotor and a second shaft. The second shaft operably connects the bladed power turbine rotor and the propulsor. The electrical assembly includes an alternating current (AC) electric motor, a motor control unit, and an electrical distribution system. The AC electric motor is coupled to the second rotational assembly. The motor control unit is electrically connected to the AC electric motor and the electrical distribution system. The motor control unit includes a processor connected in signal communication with non-transitory memory containing instructions which, when executed by the processor, cause the processor to apply a braking force to the second rotational assembly by controlling the motor control unit to convert electrical power from the electrical distribution system to output DC electrical power and supplying the output DC electrical power to the AC electric motor.

In any of the aspects or embodiments described above and herein, the instructions, when executed by the processor, may cause the processor to control a magnitude of the braking force by modulating one or both of a current or a voltage of the output DC electrical power.

In any of the aspects or embodiments described above and herein, the instructions, when executed by the processor, may cause the processor to increase the magnitude of the braking force by modulating one or both of the current or the voltage in response to identifying a rotation speed of the propulsor greater than a rotation speed threshold.

In any of the aspects or embodiments described above and herein, the instructions, when executed by the processor, may cause the processor to increase the magnitude of the braking force by modulating one or both of the current or the voltage in response to identifying a rotation speed of the second rotational assembly greater than a rotation speed threshold.

In any of the aspects or embodiments described above and herein, the AC electric motor may include a rotor. The rotor may be directly connected to the second shaft.

In any of the aspects or embodiments described above and herein, the AC electric motor may include a rotor. The gas turbine engine may include a reduction gear box. The reduction gear box may couple the second shaft and the rotor to the propulsor.

The present invention, and all its aspects, embodiments and advantages associated therewith will become more readily apparent in view of the detailed description provided below, including the accompanying drawings.

### DESCRIPTION OF THE DRAWINGS

FIG. 1 illustrates an aircraft including a propulsion system, in accordance with one or more embodiments of the present invention.
FIG. 2 schematically illustrates a cutaway, side view of an aircraft propulsion system, in accordance with one or more embodiments of the present invention.
FIG. 3 schematically illustrates a motor cooling assembly for an electric motor of the aircraft propulsion system, in accordance with one or more embodiments of the present invention.
FIG. 4 illustrates a block diagram depicting a method for controlling propulsor rotation for an aircraft propulsion system, in accordance with one or more embodiments of the present invention.
FIG. 5 schematically illustrates components of the aircraft propulsion system of FIG. 2 for a normal mode of operation, in accordance with one or more embodiments of the present invention.
FIG. 6 schematically illustrates components of the aircraft propulsion system of FIG. 2 for a hotel mode of operation, in accordance with one or more embodiments of the present invention.
FIG. 7 schematically illustrates another aircraft propulsion system, in accordance with one or more embodiments of the present invention.

### DETAILED DESCRIPTION

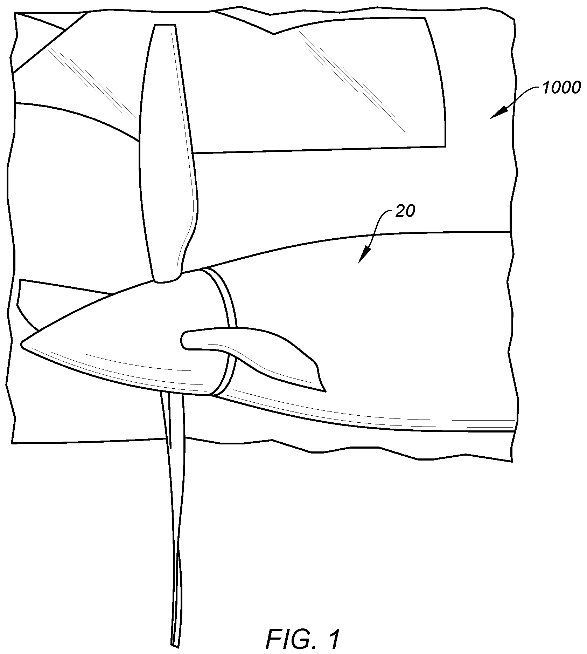

FIG. 1 illustrates an aircraft 1000 including a propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone). The propulsion system 20 of FIG. 1 is a hybrid-electric propulsion system including a gas turbine engine 22, an electrical assembly 24, and a propulsor 26. Aspects of the present invention may be equally applicable to aircraft propulsion systems including other engine configurations such as, but not limited to, intermittent combustion engines such as rotary engines (e.g., Wankel engines), piston engines, and the like.

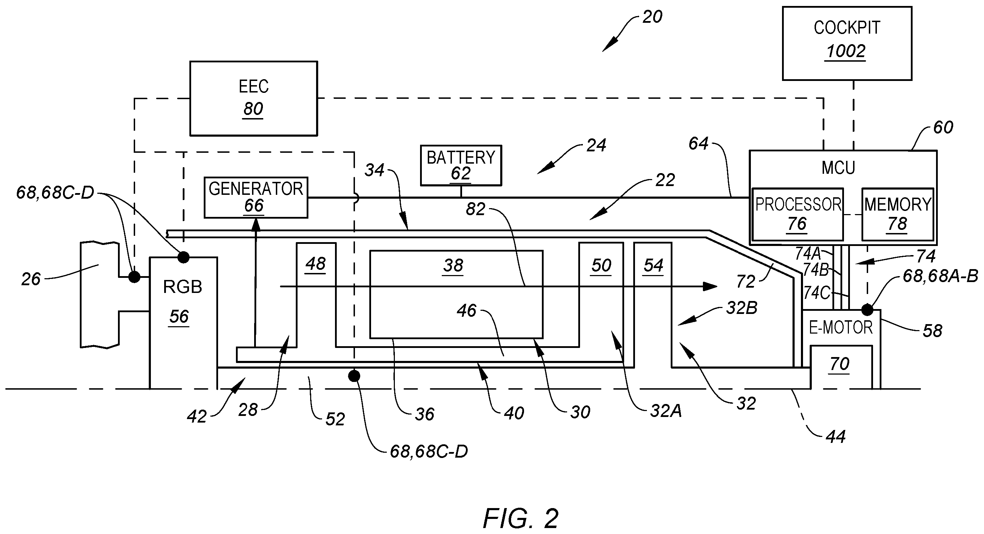

FIG. 2 schematically illustrates a cutaway, side view of the propulsion system 20. The gas turbine engine 22 of FIG. 2 is configured as a turboprop engine. However, the present invention is not limited to any particular configuration of gas turbine engine for the propulsion assembly 20, and examples of gas turbine engine configurations for the propulsion system 20 may include, but are not limited to, a turbofan engine, a turbojet engine, a propfan engine, or the like. The gas turbine engine 22 of FIG. 1 includes a compressor section 28, a combustor section 30, a turbine section 32, and an engine static structure 34. The combustor section 30 includes a combustor 36 (e.g., an annular combustor) forming a combustion chamber 38. The turbine section 32 includes a high-pressure turbine section 32A and a power turbine section 32B.

Components of the compressor section 28 and the turbine section 32 of FIG. 2 form a first rotational assembly 40 (e.g., a high-pressure spool) and a second rotational assembly 42 of the gas turbine engine 22. The first rotational assembly 40 and the second rotational assembly 42 are mounted for rotation about a rotational axis 44 (e.g., an axial centerline) of the gas turbine engine 22 relative to the engine static structure 34.

The first rotational assembly 40 includes a first shaft 46, a bladed compressor rotor 48 for the compressor section 28, and a bladed turbine rotor 50 for the high-pressure turbine section 32A. The first shaft 46 interconnects the bladed compressor rotor 48 and the bladed turbine rotor 50.

The second rotational assembly 42 of FIG. 2 includes a second shaft 52 and a bladed power turbine rotor 54 for the power turbine section 32B. The second shaft 52 is connected to the bladed power turbine rotor 54. The second shaft 52 operably connects (e.g., directly or indirectly connects) the bladed power turbine rotor 54 with the propulsor 26.

The engine static structure 34 includes engine casings, cowlings, and other fixed (e.g., non-rotating) structures of the gas turbine engine 22 which house and/or support components of the gas turbine engine 22 such as, but not limited to, those of the compressor section 28, the combustor section 30, and the turbine section 32. The engine static structure 34 includes one or more bearing assemblies and/or gear trains configured to rotationally support and/or interconnect components of the first rotational assembly 40 and the second rotational assembly 42. The engine static structure 34 of FIG. 2 includes a reduction gear box (RGB) 56 coupling the second shaft 52 and the propulsor 26. The reduction gear box 56 includes a gear assembly (e.g., an epicyclic gear assembly) configured to drive the propulsor 26 at a reduced rotational speed relative to the second shaft 52. Of course, the second shaft 52 may alternatively be directly connected to the propulsor 26 to drive the propulsor 26 at the same rotational speed as the second shaft 52.

The electrical assembly 24 includes an electric motor 58, a motor control unit (MCU) 60, a battery 62, and an electrical distribution system 64. The electrical assembly 24 may additionally include a generator 66 and one or more drive train sensors 68.

The electric motor 58 includes a rotor 70. The rotor 70 is coupled to the second shaft 52. The rotor 70 may be directly coupled to the second shaft 52 as shown, for example, in FIG. 2. Alternatively, the rotor 70 may be coupled to the second shaft 52 by one or more intermediate shafts, mechanical couplings, gear trains, or the like. The electric motor 58 is a three-phase alternating current (AC) electrical motor. In other words, the electric motor 58 is configured to drive rotation of the rotor 70 (e.g., about the rotational axis 44) using AC power supplied to the electric motor 58 from one or more other components of the electrical assembly 24 (e.g., the battery 62 and/or the generator 66). The electric motor 58 may be configured as an induction motor, a synchronous motor, or the like, and the present invention is not limited to any particular configuration of the AC electric motor 58. The electric motor 58 of FIG. 2 to mounted to the engine static structure 34 at (e.g., on, adjacent, or proximate) and aft end of the gas turbine engine 22. For example, the electric motor 58 of FIG. 2 is mounted on an exterior of an engine exhaust case 72 of the engine static structure 34 at (e.g., on, adjacent, or proximate) the rotational axis 44. The present invention, however, is not limited to the foregoing exemplary position of the electric motor 58 relative to the gas turbine engine 22 and its section shaft 52. For example, the electric motor 58 may alternatively be disposed axially between the propulsor 26 and the gas turbine engine 22 sections 28, 30, 32, and coupled to the second shaft 52.

The motor control unit 60 is electrically connected to the electric motor 58 and the electrical distribution system 64. In particular, the motor control unit 60 is electrically connected to the electric motor 58 by a three-phase electrical connection 74 including a first phase 74A, a second phase 74B, and a third phase 74C. The motor control unit 60 is configured to convert direct current (DC) power (e.g., using one or more inverters, power transistors, and/or other power circuitry) from the electrical distribution system 64 to AC waveforms for control and operation of the electric motor 58. The motor control unit 60 may modulate the generated AC waveforms to control a rotation speed and/or output torque of the electric motor 58.

The motor control unit 60 includes a processor 76 connected in communication (e.g., signal communication) with memory 78. The processor 76 may include any type of computing device, computational circuit, processor(s), central processing unit (CPU), graphics processing unit (GPU), computer, or the like capable of executing a series of instructions that are stored in memory 78. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the motor control unit 60 to accomplish the same algorithmically and/or coordination of electrical assembly 24 components (e.g., the electric motor 58). The memory 78 may include a single memory device or a plurality of memory devices (e.g., a computer-readable storage device that can be read, written, or otherwise accessed by a general purpose or special purpose computing device, including any processing electronics and/or processing circuitry capable of executing instructions). The present invention is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly and/or indirectly coupled to the motor control unit 60. The motor control unit 60 may include, or may be in communication with, a user interface including one or more inputs devices and/or one or more output devices, for example, an input device that enables a user to enter data and/or instructions and an output device configured to display information (e.g., a visual display or a printer), or to transfer data, etc. The motor control unit 60 may be connected in signal communication with one or more components of the aircraft 1000 or its propulsion system 20. For example, the motor control unit 60 may be connected in signal communication with cockpit control systems 1002 of the aircraft 1000, an electronic engine control (EEC) system 80 of the gas turbine engine 22, the drive train sensors 68, etc. Briefly, the EEC system 80 may control operating parameters of the gas turbine engine 22 including, but not limited to, fuel flow, stator vane position (e.g., variable compressor inlet guide vane (IGV) position), compressor air bleed valve position, shaft (e.g., first shaft 46 and/or second shaft 52) torque and/or rotation speed, etc. so as to control an engine power or performance of the gas turbine engine 22. For example, the EEC system 80 may modulate fuel flow to the combustor 36 to obtain a desired output power of the gas turbine engine 22. In some embodiments, the EEC system 80 may be part of a full authority digital engine control (FADEC) system for the gas turbine engine 22. Communications between the motor control unit 60 and external electrical or electronic devices (e.g., the cockpit control systems 1002, the EEC system 80, and/or the drive train sensors 68) may be via a hardwire connection or via a wireless connection. A person of skill in the art will recognize that portions of the motor control unit 60 may assume various forms (e.g., digital signal processor, analog device, etc.) capable of performing the functions described herein.

The battery 62 is electrically connected to the electrical distribution system 64. The battery 62 is configured to selectively supply electrical power to the electrical distribution system 64 independently (e.g., as a single power source for the electrical assembly 24) or in combination with one or more other electrical power sources (e.g., the generator 66). The battery 62 may include a plurality of battery modules (e.g., battery packs), battery cells, and/or the like electrically connected together in series and/or parallel as necessary to configure the battery 62 with the desired electrical characteristics (e.g., voltage output, current output, storage capacity, etc.). The present invention is not limited to any particular configuration of the battery 62. The battery 62 (e.g., and its battery cells) may be configured as a rechargeable battery having a battery chemistry such as, but not limited to, lead acid, nickel cadmium (NiCd), nickel-metal hydride (Ni-MH), lithium-ion (Li-ion), lithium-polymer (Li-poly), lithium metal, and the like.

The electrical distribution system 64 electrically connects components of the electrical assembly 24. The electrical distribution system 64 includes switchgear, cables, wires, breakers, switches, electrical power conditional and/or conversion (e.g., AC to DC or DC to AC conversion) components, and/or other electrical components to effect the transfer of electrical power between components of the electrical assembly 24. The electrical distribution system 64 may additionally include one or more electrical power controllers, for example, to control a magnitude and/or direction of electrical current flow to components of the electrical assembly 24. The electrical distribution system 64 is configured to supply electrical power to one or more electrical loads of the aircraft 1000, the propulsion system 20, and/or the gas turbine engine 22.

The electrical assembly 24 may include the generator 66. The generator 66 is electrically connected to the electrical distribution system 64 and configured to generate and supply electrical power to components of the electrical assembly 24 and/or electrical loads of the aircraft 1000, the propulsion system 20, and/or the gas turbine engine 22. The generator 66 is operably connected to the first rotational assembly 40 (e.g., the first shaft 46) such that rotation of the first rotational assembly 40 drives rotation of the generator 66 to generate electrical power for the electrical distribution system 64. The generator 66 may be operably connected to the by any suitable gear train assembly or other mechanical interconnection, and the present invention is not limited to any particular mechanical interconnection between the first rotational assembly 40 and the generator 66. The generator 66 may include a generator control unit. This generator control unit may facilitate control of the generator 66 electrical output such that electrical voltage levels supplied to the electrical distribution system 64 may be regulated within control limits. Additionally, the generator control unit may implement protection control to ensure that the generator 66 is not overloaded.

The electrical assembly 24 may include the one or more drive train sensors 68. The drive train sensors 68 may include a rotation speed sensor 68A for the electric motor 58, a torque sensor 68B for the electric motor 58, one or more rotation speed sensors 68C for the second rotational assembly 42 and/or the propulsor 26, and/or one or more torque sensors 68D for the second rotational assembly 42 and/or the propulsor 26. The rotation speed sensor 68A and the torque sensor 68B may be configured to measure a rotation speed and a torque, respectively, of the rotor 70. The rotation speed sensor 68A and the torque sensor 68B may be connected in signal communication with the motor control unit 60. Similarly, the rotation speed sensors 68C and the torque sensors 68D may be configured to measure a rotation speed and a torque, respectively, of the second rotational assembly 42 and/or the propulsor 26. The rotation speed sensors 68C and the torque sensors 68D may be connected in signal communication with the EEC system 80.

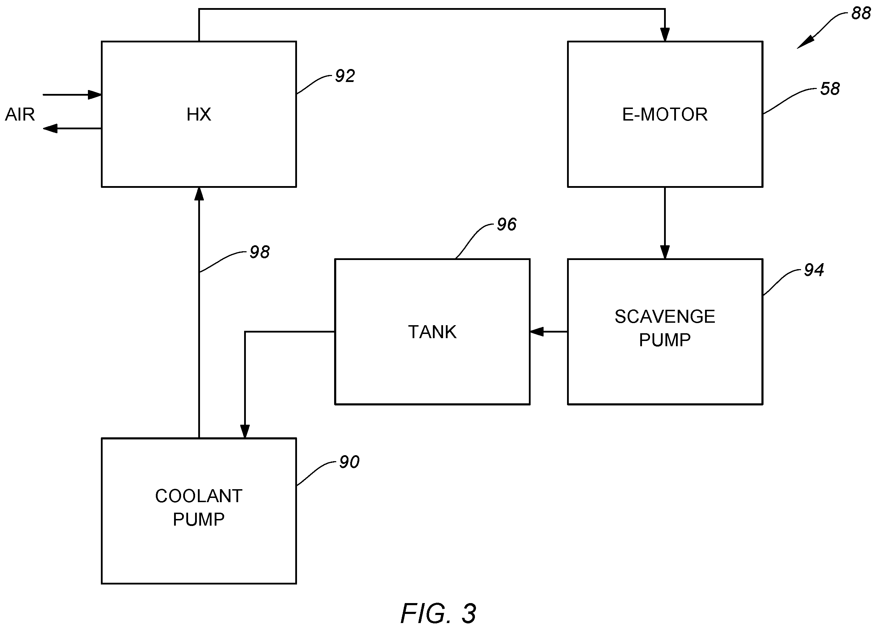

Referring briefly to FIG. 3, the electrical assembly 24 may additionally include a motor cooling assembly 88 configured to facilitate cooling of the electric motor 58. The motor cooling assembly 88 of FIG. 3 includes a coolant pump 90, a heat exchanger 92, a scavenge pump 94, and a coolant tank 96. The present invention, however, is not limited to the foregoing exemplary configuration of the motor cooling assembly 88. The electric motor 58 and components of the motor cooling assembly 88 may be connected in fluid communication by any suitable conduit (e.g., tube, pipe, hose, etc.) to form a coolant flow path 98 of the motor cooling assembly 88. The coolant pump 90 is configured to direct (e.g., pump) coolant from the coolant tank 96 to the electric motor 58 through the heat exchanger 92. The heat exchanger 92 of FIG. 3 is an air-cooled heat exchanger. For example, the heat exchanger 92 may cool the coolant directed therethrough by transmitting heat from the coolant to air flow through the heat exchanger 92 (e.g., air flow from an air inlet of the propulsion system 20, the compressor section 28, a blow, or another air flow source). Coolant flow through the electric motor 58 along the coolant flow path 98 facilitates lubrication and cooling of the rotor 70 as well as cooling of motor windings of the electric motor 58. Cooling flow exiting the electric motor 58 is returned to the coolant tank 96, for example, by the scavenge pump 94. The coolant pump 90 and the scavenge pump 94 may be driven by the gas turbine engine 22, for example, through an auxiliary gear box (AGB) driven by rotation of the first rotational assembly 40 or the second rotational assembly 42. Alternatively, one or both of the coolant pump 90 and the scavenge pump 94 may be an electrically operated pump. The coolant for the motor cooling assembly 88 may typically be oil, however, the present invention is not limited to any particular coolant for the motor cooling assembly 88.

During operation of the propulsion system 20 of FIG. 2, ambient air enters the propulsion system 20 through an air intake into and through a core flow path 82 of the gas turbine engine 22. The ambient air flow along the core flow path 82 is compressed in the compressor section 28 and directed into the combustion chamber 38 of the combustor 36 within the combustor section 30. Fuel is injected into the combustion chamber 38 and mixed with the compressed air to provide a fuel-air mixture. This fuel-air mixture is ignited, and combustion products thereof flow through the high-pressure turbine section 32A and the power turbine section 32B, and are exhausted from the propulsion system 20. The bladed turbine rotor 50 and the bladed power turbine rotor 54 rotationally drive the first rotational assembly 40 and the second rotational assembly 42, respectively, in response to the combustion gas flow through the high-pressure turbine section 32A and the power turbine section 32B. During operation of the gas turbine engine 22, the motor control unit 60 may control the electrical motor 58 to apply torque to the second rotational assembly 42 (e.g., the second shaft 52), for example, to assist the gas turbine engine 22 in driving rotation of the propulsor 26. The motor control unit 60 may receive instructions from the EEC system 80 and/or the cockpit control system 1002 for operation of the electric motor 58. Alternatively, the motor control unit 60 may be configured to respond to sensor inputs (e.g., from the drive train sensors 68) to independently control the electric motor 58.

During some operating conditions of the aircraft 1000 and its propulsion system 20, particularly where the aircraft 1000 is on the ground, the gas turbine engine 22 may be operated in a hotel mode to provide electrical power, compressor bleed air, or other support functions for the aircraft 1000 but without the need to facilitate propulsion. For the safety of aircraft support personnel in proximity to the aircraft 1000, it may be necessary to prevent or limit rotation of the propulsor 26 during operation of the gas turbine engine 22 in the hotel mode. For example, in the hotel mode, the gas turbine engine 22 may be operated to drive rotation of the first rotational assembly 40 to provide electrical power (e.g., from the generator 66) and compressor bleed air (e.g., for an environmental control system (ECS)) for the aircraft 1000 and a braking force may be applied to the second rotational assembly 42 to prevent or limit rotation of the propulsor 26. For other operating conditions of the aircraft 1000 and its propulsion system 20 (e.g., during flight), the gas turbine engine 22 may be operated in a normal mode to drive rotation of the propulsor 26 to facilitate propulsion for the aircraft 1000.

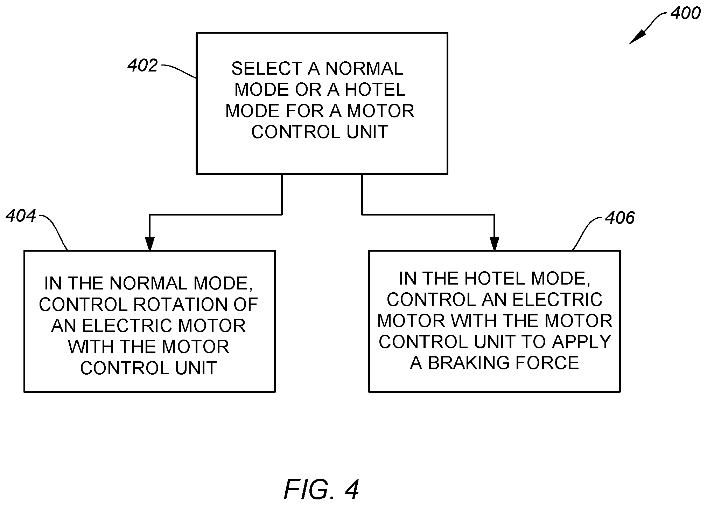

Referring to FIG. 4, a method 400 for controlling propulsor rotation for an aircraft propulsion system (e.g., the propulsion system 20) is provided. FIG. 4 illustrates a flowchart for the method 400. The method 400 may be performed for the propulsion system 20, as described herein. The motor control unit 60 may be used to execute or control one or more steps of the method 400 for the propulsion system 20. For example, the processor 76 may execute instructions stored in memory 78, thereby causing the motor control unit 60 and/or its processor 76 to execute or otherwise control one or more steps of the method 400. However, it should be understood that the method 400 is not limited to use with the propulsion system 20 described herein. Unless otherwise noted herein, it should be understood that the steps of method 400 are not required to be performed in the specific sequence in which they are discussed below and, in some embodiments, the steps of method 400 may be performed separately or simultaneously.

Step 402 includes selecting a normal mode or a hotel mode of the motor control unit 60. For example, a pilot or other operator of the aircraft 1000 or the propulsion system 20 may select the normal mode or the hotel mode at the cockpit control system 1002. The cockpit control system 1002 may transmit instructions to the motor control unit 60 to operate in the normal mode or the hotel mode.

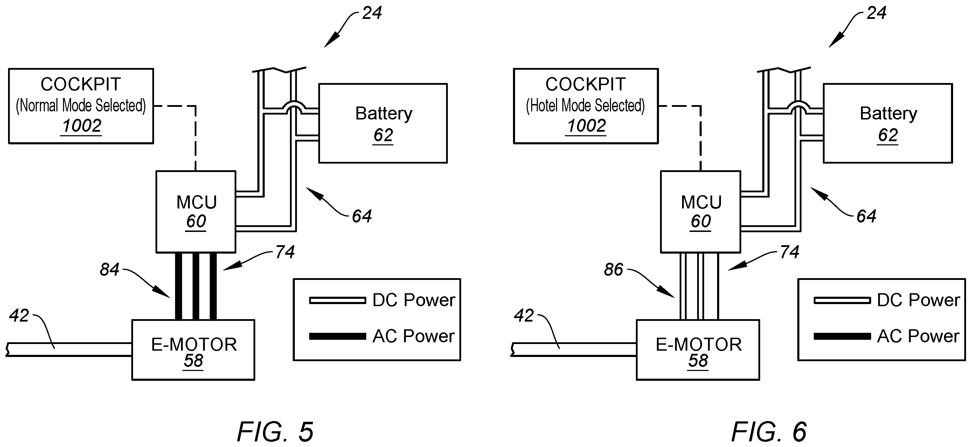

Step 404 includes controlling the electric motor 58 with the motor control unit 60 operating in the normal mode. FIG. 5 schematically illustrates components of the propulsion system 20 with the motor control unit 60 operating in the normal mode. In the normal mode, the motor control unit 60 controls operation (e.g., rotation) of the electric motor 58 by selectively converting electrical power (e.g., DC electrical power) from the electrical distribution system 64 (e.g., the battery 62 and/or the generator 66) to output three-phase AC electrical power 84 and supplying the output three-phase AC electrical power 84 to the electric motor 58 through the three-phase electrical connection 74 to drive rotation of the rotor 70. Accordingly, the motor control unit 60 may control the electric motor 58 to apply torque to the second rotational assembly 42 (e.g., the second shaft 52) to cooperatively drive rotation of the second rotational assembly 42, and hence the propulsor 26, with the gas turbine engine 22. The EEC system 80 may transmit instructions to the motor control unit 60 to cause the motor control unit 60 to selectively apply torque to the second rotational assembly 42 with the electric motor 58 to achieve a target rotation speed and/or torque of the propulsor 26.

Step 406 includes controlling the electric motor 58 with the motor control unit 60 operating in the hotel mode. FIG. 6 schematically illustrates components of the propulsion system 29 with the motor control unit 60 operating in the hotel mode. In the hotel mode, the motor control unit 60 controls operation of the electric motor 58 to apply a braking force to the second rotational assembly 42 and, hence the propulsor 26, while the gas turbine engine 22 continues to operate (e.g., while the first rotational assembly 40 continues to rotate driven by combustion gas flow). The motor control unit 60 applies braking force to the second rotational assembly 42 with the electric motor 58 by converting the electrical power (e.g., DC electrical power) from the electrical distribution system to output DC electrical power 86 and supplying the output DC electrical power 86 to the electric motor 58 through the three-phase electrical connection 74. The DC electrical current flow through the electric motor 58 (e.g., stator windings of the electric motor 58) generates a stationary magnetic field opposing rotation of the rotor 70. The motor control unit 60 may control a voltage and/or current of the output DC electrical power 86 to the electric motor 58 to control a magnitude of the braking force applied to the second rotational assembly 42 by the electric motor 58. While controlling the motor control unit 60 in the hotel mode and/or while applying braking force to the second rotational assembly 42 with the electric motor 58, the motor cooling assembly 88 may operate to facilitate cooling of the electric motor 58. For example, the EEC system 80, the motor control unit 60, or another control system of the propulsion system 20 may control the motor cooling assembly 88 to circulate coolant through the electric motor 58 to remove heat generated by DC current flow through the electric motor 58.

In some embodiments, step 406 may include identifying rotation of the second rotational assembly 42 and/or the propulsor 26 and controlling the output DC electrical power 86 in response to the identified rotation. The motor control unit 60 may control a current and/or voltage of the output DC electrical power 86 based on measured rotation of the second rotational assembly 42 and/or the propulsor 26 transmitted from the drive train sensors 68 (e.g., the rotation speed sensors 68C and/or the torque sensors 68D) to the motor control unit 60 by the EEC system 80. For example, the motor control unit 60 may increase a current and/or voltage of the output DC electrical power 86 in response to identifying a rotation speed of the second rotational assembly 42 and/or the propulsor 26 greater than a rotation speed threshold.

In at least some conventional aircraft propulsion systems, a propeller braking system may be used to slow or stop propeller rotation. For example, a propeller braking system may use hydraulic pressure to apply frictional force to the propeller or propeller drive train to slow or stop propeller rotation. However, these propeller braking systems may include a propeller brake, hydraulic lines, valves, sensors, and pumps, and other components, thereby adding considerable weight and complexity to the associated aircraft propulsion system. Moreover, these propeller braking systems may require periodic maintenance to monitor and service consumable friction braking materials. The present invention facilitates propulsor braking on hybrid-electric aircraft propulsion systems without the need for a separate propeller braking system using electrical assembly components already present on the aircraft propulsion system.

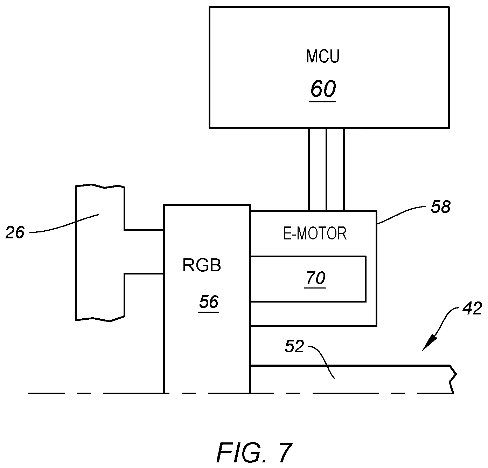

Referring to FIG. 7, in some embodiments, the electric motor 58 may be coupled to the second rotational assembly 42 and the propulsor 26 by the reduction gear box 56. For example, the rotor 70 and the second rotational assembly 42 (e.g., the second shaft 52) may be coupled to the propulsor 26 by a gear assembly (e.g., an epicyclic gear assembly) of the reduction gear box 56.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the invention may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the invention--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An aircraft propulsion system (20) comprising:
a propulsor (26);
a gas turbine engine (22) including a rotational assembly (42) configured for rotation about a rotational axis (44) of the gas turbine engine (22), the rotational assembly (42) including a bladed power turbine rotor (54) and a shaft (52), the shaft (52) operably connecting the bladed power turbine rotor (54) and the propulsor (26); and
an electrical assembly (24) including an alternating current (AC) electric motor (58), a motor control unit (60), and an electrical distribution system (64), the AC electric motor (58) coupled to the rotational assembly (42), the motor control unit (60) electrically connected to the AC electric motor (58) and the electrical distribution system (64), the motor control unit (60) selectively operable in a normal mode and a hotel mode, the motor control unit (60) including a processor (76) connected in signal communication with non-transitory memory (78) containing instructions which, when executed by the processor (76), cause the processor (76) to:
in the normal mode, control the motor control unit (60) to convert electrical power from the electrical distribution system (64) to output AC electrical power and supply the output AC electrical power to the electric motor (58); and
in the hotel mode, apply a braking force to the rotational assembly (42) by controlling the motor control unit (60) to convert the electrical power from the electrical distribution system (64) to output DC electrical power and supplying the output DC electrical power to the AC electric motor (58).

2. The aircraft propulsion system (20) of claim 1, wherein the instructions, when executed by the processor (76), cause the processor (76) to control a magnitude of the braking force, in the hotel mode, by modulating one or both of a current or a voltage of the output DC electrical power.

3. The aircraft propulsion system (20) of claim 2, wherein the instructions, when executed by the processor (76), cause the processor (76) to increase the magnitude of the braking force, in the hotel mode, by modulating one or both of the current or the voltage in response to identifying a rotation speed of the propulsor (26) greater than a rotation speed threshold.

4. The aircraft propulsion system (20) of claim 2 or 3, wherein the instructions, when executed by the processor (76), cause the processor (76) to increase the magnitude of the braking force, in the hotel mode, by modulating one or both of the current or the voltage in response to identifying a rotation speed of the rotational assembly (42) greater than a rotation speed threshold.

5. The aircraft propulsion system (20) of any preceding claim, wherein the gas turbine engine (22) further includes a second rotational assembly (40) including a bladed compressor rotor (48), a bladed turbine rotor (50), and a second shaft (46), the second shaft (46) interconnecting the bladed compressor rotor (48) and the bladed turbine rotor (50), wherein the electrical assembly (24) further includes a generator (66) coupled with the second rotational assembly (40), the generator (66) electrically connected to the electrical distribution system (64).

6. The aircraft propulsion system (20) of any preceding claim, wherein the electrical assembly (24) further includes a battery (62) electrically connected to the electrical distribution system (64).

7. The aircraft propulsion system (20) of any preceding claim, wherein the AC electric motor (58) includes a rotor (70), and the rotor (70) is directly connected to the shaft (52).

8. The aircraft propulsion system (20) of any preceding claim, wherein the AC electric motor (58) includes a or the rotor, the gas turbine engine (22) includes a reduction gear box (56), and the reduction gear box (56) couples the rotational assembly (42) and the rotor (70) to the propulsor (26).

9. A method for controlling a propulsor (26) of an aircraft propulsion system (20), the method comprising:
rotating a first rotational assembly (40) of a gas turbine engine (22), the first rotational assembly (42) including a bladed compressor rotor (48), a bladed turbine rotor (50), and a first shaft (46) interconnecting the bladed compressor rotor (48) and the bladed turbine rotor (50);
controlling rotation of a propulsor (26) of the aircraft propulsion system (20) with a second rotational assembly (42) of the gas turbine engine (22), the second rotational assembly (42) including a bladed power turbine rotor (54) and a second shaft (52), the second shaft (52) operably connecting the bladed power turbine rotor (54) and the propulsor (26); and
applying a braking force to the second rotational assembly (42) with an alternating current (AC) electric motor (58) of an electrical assembly (24) of the aircraft propulsion system (20), the electrical assembly (24) including a motor control unit (60) electrically connected to the AC electric motor (58), applying the braking force to the second rotational assembly (42) with the AC electric motor (58) including supplying an output direct current (DC) electrical power to the AC electric motor (58) with the motor control unit (60) concurrent with rotating the first rotational assembly (40).

10. The method of claim 9, wherein applying the braking force to the second rotational assembly (42) includes controlling a magnitude of the braking force by modulating one or both of a current or a voltage of the output DC electrical power with the motor control unit (60).

11. The method of claim 10, further comprising:
identifying a rotation of the propulsor (26), wherein controlling the magnitude of the braking force includes increasing the magnitude of the braking force in response to identifying the rotation of the propulsor (26); and/or
identifying a rotation of the second rotational assembly (42), wherein controlling the magnitude of the braking force includes increasing the magnitude of the braking force in response to identifying the rotation of the second rotational assembly (42).

12. The method of any of claims 9 to 11, wherein the electrical assembly (24) further includes an electrical distribution system (64) and a generator (66), the electrical distribution system (64) is electrically connected to the generator (66) and the motor control unit (66), the generator (66) is coupled to the first rotational assembly (40), and rotating the first rotational assembly (40) further includes generating electrical power with the generator (66) and supplying the electrical power to the electrical distribution system (64).

13. The method of any of claims 9 to 12, wherein the electrical assembly (24) further includes an or the electrical distribution system (64) and a battery (62), and applying the braking force to the second rotational assembly (42) includes supplying electrical power to the motor control unit (60) with the battery (62) through the electrical distribution system (64).

14. An aircraft propulsion system (20) comprising:
a propulsor (26);
a gas turbine engine (22) including a first rotational assembly (40) and a second rotational assembly (42), the first rotational assembly (40) and the second rotational assembly (42) configured for rotation about a rotational axis (44) of the gas turbine engine (22), wherein:
the first rotational assembly (40) includes a bladed compressor rotor (48), a bladed turbine rotor (50), and a first shaft (46) interconnecting the bladed compressor rotor (48) and the bladed turbine rotor (50), and
the second rotational assembly (42) includes a bladed power turbine rotor (54) and a second shaft (52), the second shaft (52) operably connecting the bladed power turbine rotor (54) and the propulsor (26); and
an electrical assembly (24) including an alternating current (AC) electric motor (58), a motor control unit (60), and an electrical distribution system (64), the AC electric motor (58) coupled to the second rotational assembly (42), the motor control unit (60) electrically connected to the AC electric motor (58) and the electrical distribution system (64), the motor control unit (60) including a processor (76) connected in signal communication with non-transitory memory (78) containing instructions which, when executed by the processor (76), cause the processor (76) to:
apply a braking force to the second rotational assembly (42) by controlling the motor control unit (60) to convert electrical power from the electrical distribution system (64) to output DC electrical power and supplying the output DC electrical power to the AC electric motor (58),
optionally wherein:
the AC electric motor (58) includes a rotor (70), and the rotor is directly connected to the second shaft (52); and/or
the AC electric motor (58) includes a or the rotor (70), the gas turbine engine (22) includes a reduction gear box (56), and the reduction gear box (56) couples the second shaft (52) and the rotor (70) to the propulsor (26).

15. The aircraft propulsion system (20) of claim 14, wherein the instructions, when executed by the processor (76), cause the processor (76) to control a magnitude of the braking force by modulating one or both of a current or a voltage of the output DC electrical power,
optionally wherein the instructions, when executed by the processor (76), cause the processor (76) to increase the magnitude of the braking force by modulating one or both of the current or the voltage in response to identifying:
a rotation speed of the propulsor (26) greater than a rotation speed threshold; and/or
a rotation speed of the second rotational assembly (42) greater than a rotation speed threshold.
